# FASCICULE DE BREVET EUROPEEN

(11) **EP 1 582 702 B1**
(45) Date de publication et mention de la délivrance du brevet: **11.10.2006**
(21) Numéro de dépôt: 05102354.7
(22) Date de dépôt: 23.03.2005
(51) Int. Cl.: F01D 21/04

(54) **Structure d'entrée d'air pour moteur d'aéronef**
Lufteinlass-Struktur für ein Flugzeugtriebwerk
Air intake structure for an airplane engine

(30) Priorité: 29.03.2004 FR 0450613
(43) Date de publication de la demande: 05.10.2005
(73) Titulaire: AIRBUS France, 31060 Toulouse (FR)
(72) Inventeur: Porte, Alain, 31770, COLOMIERS (FR); Andre, Robert, 31320, AUZEVILLE TOLOSANE (FR)
(74) Mandataire: Poulin, Gérard

(56) Documents cités:
- US-B1- 6 328 258

## Description

### DOMAINE TECHNIQUE

L'invention concerne les nacelles susceptibles d'être utilisées pour tout type de moteur ou de turboréacteur.

Plus précisément, l'invention se rapporte à la structure d'entrée d'air de la nacelle et à sa rigidité.

### ÉTAT DE LA TECHNIQUE ANTÉRIEURE

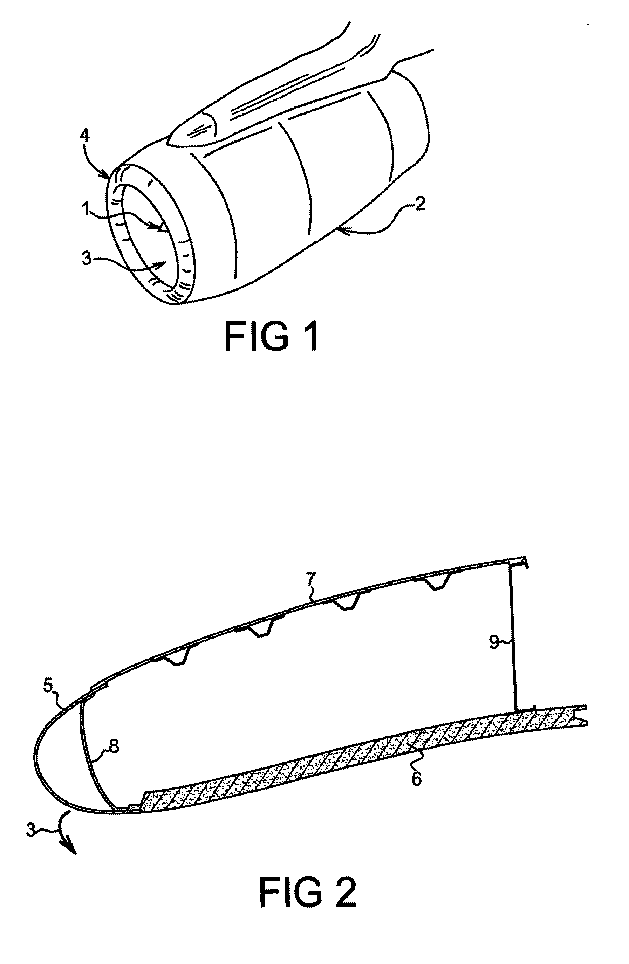

Comme représenté très schématiquement en perspective sur la figure 1 des dessins annexés, un moteur d'aéronef comprend une partie centrale 1, dans laquelle est logé le moteur proprement dit, ainsi qu'une partie annulaire 2, appelée nacelle, entourant de façon coaxiale la partie centrale du moteur, et délimitant avec celle-ci un canal annulaire 3 appelé canal de soufflante. Une soufflante, entraînée par la partie centrale 1 du moteur, est placée dans ce canal 3 au niveau de capots de soufflante.

La partie avant de la nacelle 2 constitue une structure d'entrée d'air 4. Cette structure a notamment pour fonction d'assurer l'écoulement aérodynamique de l'air d'une part vers le canal de soufflante 3, et d'autre part vers l'extérieur de la nacelle 2. Une telle structure comprend habituellement une lèvre d'entrée d'air 5 (voir figure 2) qui est rapportée sur les enveloppes intérieure 6 et extérieure 7 de la nacelle 2. Par convention, en l'absence d'une précision contraire, les termes « intérieur » et « extérieur » seront utilisés pour désigner la position ou l'orientation des pièces par rapport au canal de soufflante 3 issu de la structure d'entrée d'air 4.

De façon usuelle, l'enveloppe intérieure 6, c'est-à-dire du côté du canal de soufflante 3, en arrière de la lèvre d'entrée d'air 5, est constituée d'un panneau acoustique. Ce panneau présente une structure propre à atténuer les bruits produits par la partie centrale du moteur, et notamment par la soufflante. Dans la pratique, cette structure est habituellement de type composite sandwich, c'est-à-dire que le panneau 6 intègre une âme en nid d'abeille.

La lèvre d'entrée d'air 5 présente en section la forme d'un U ouvert vers l'arrière. Elle forme l'enveloppe extérieure de la partie avant de la structure d'entrée d'air 4. C'est elle qui assure le partage de l'air entre la partie qui pénètre dans le canal de soufflante 3 et la partie qui s'écoule autour de la nacelle 2.

Pour renforcer la structure 4, un cadre de renfort avant 8 et un cadre de renfort arrière 9 peuvent traverser la structure entre les enveloppes intérieure et extérieure. Par convention, les termes « avant » et « arrière » seront utilisés dans l'ensemble du texte en prenant pour référence l'avant et l'arrière du moteur.

Le cadre de renfort avant 8 est placé à l'intérieur et à l'arrière de la lèvre d'entrée d'air 5, au niveau de l'extrémité d'entrée de la partie annulaire formée par les enveloppes 6 et 7. Le cadre de renfort arrière 9 est placé à l'intérieur de la nacelle 2, à proximité des capots de soufflante, à l'avant de la zone d'accrochage du moteur 1 ; la zone d'accrochage du moteur se situe au niveau d'une zone de fixation entre l'entrée d'air et les capots de soufflante, mais de fait, extérieurement au panneau acoustique de l'enveloppe intérieure 6 dont elle détruirait les caractéristiques. Les cadres de renforts 8, 9 ont pour fonction d'assurer la tenue mécanique de la partie avant de la nacelle et d'aider à en préserver la forme et le dimensionnement. A cet effet, ils peuvent être fixés au moyen de rivets ou de vis, par exemple à la nacelle 2 ou, pour le cadre de renfort avant 8, directement à la lèvre d'entrée d'air 5.

Quelques exemples d'une telle structure d'entrée d'air sont illustrés dans le brevet américain US 6 328 258.

En vol, lorsque le moteur s'arrête et tourne « en moulinet » grâce à la vitesse de l'aéronef, il se produit un phénomène d'aspiration au niveau de l'entrée d'air 4 qui aspire la lèvre d'entrée d'air 5 vers l'intérieur du canal de soufflante 3. Comme les parties constitutives de la nacelle sont solidaires les unes des autres, l'aspiration de la lèvre d'entrée d'air 5 produit une déviation de chacune d'entre elles par rapport à leur position normale. Ceci engendre des jeux importants qui pénalisent l'aérodynamique de la nacelle dans sa totalité et une traînée parasite. Par ailleurs, cette déviation sollicite les composants de la structure, ce qui oblige à prendre en compte les efforts engendrés par ce cas de fonctionnement marginal.

Avec l'arrivée de moteurs d'aéronef à plus grand taux de dilution et/ou à diamètre de soufflante plus important (par exemple pour la motorisation d'aéronefs plus lourds de type gros porteurs), les déviations infligées à la structure d'entrée d'air sont plus fortes que dans le passé. Il s'avère que les cadres de renfort avant 8 et arrière 9 ne permettent pas de contrer les déviations infligées désormais, et que les techniques actuelles n'apportent pas de solution permettant d'éviter cet inconvénient.

### EXPOSÉ DE L'INVENTION

L'invention a pour objet une structure d'entrée d'air dans laquelle la liaison entre la lèvre et la nacelle est réalisée de façon telle que les inconvénients précités sont largement réduits. En particulier, dans le cadre de l'invention, la mise en moulinet du moteur, qui tend à déformer la structure d'entrée d'air vers l'intérieur du canal de soufflante, n'entraîne plus l'aspiration de la lèvre d'entrée d'air.

Conformément à l'invention, ce résultat est obtenu grâce à des moyens additionnels pour rigidifier la structure d'entrée d'air d'une nacelle d'aéronef, qui sont positionnés de façon à s'opposer à la déviation engendrée par l'aspiration au niveau de l'entrée d'air, entre autres de la lèvre d'entrée d'air. Plus particulièrement, la structure d'entrée d'air selon l'un des aspects de l'invention comprend une partie annulaire composée d'une enveloppe extérieure et d'une enveloppe intérieure, et des moyens pour la rigidifier solidarisés à leurs extrémités aux enveloppes intérieure et extérieure, la solidarisation s'effectuant pour une extrémité au niveau de l'entrée d'air et pour l'autre au niveau des capots de soufflante.

Avantageusement, la structure comporte une lèvre d'entrée d'air pour assurer le profil aérodynamique. Elle peut aussi comprendre des moyens de renfort avant et/ou arrière. Selon une possibilité, les moyens supplémentaires pour rigidifier la structure sont solidarisés conjointement aux moyens de renfort avant et/ou arrière.

De préférence, les moyens supplémentaires pour rigidifier sont sous la forme de bielles, avantageusement composites, et leur fixation s'effectue au moyen de rivets, ce qui simplifie dimensionnement et mise en place des différents éléments additionnels.

### BRÈVE DESCRIPTION DES DESSINS

Les figures annexées permettront de mieux comprendre l'invention, mais ne sont données qu'à titre indicatif et ne sont nullement restrictives.

La figure 1, déjà décrite, montre un moteur d'aéronef.

La figure 2, déjà décrite, est une vue en coupe longitudinale représentant une première technique de réalisation connue d'une structure d'entrée d'air qui illustre les renforts existants.

La figure 3 présente un exemple de réalisation d'une structure d'entrée d'air conforme à l'invention.

### EXPOSÉ DÉTAILLÉ DE MODES DE RÉALISATION PARTICULIERS

Il apparaît en considérant la structure présentée sur la figure 2 décrite plus haut que la rigidité apportée par les cadres de renfort 8 et 9 peut être insuffisante, notamment si une contrainte mécanique agit sur la structure d'entrée d'air 4 dans une direction non protégée par les cadres de renfort 8 et 9, par exemple dans le sens longitudinal. En particulier, une aspiration intense, occasionnée par exemple par l'arrêt du moteur et le moulinet de la soufflante, tend à amener la lèvre d'entrée d'air 5 vers l'intérieur du canal de soufflante 3, tel qu'illustré par la flèche sur la figure 2 : un risque d'endommagement de la structure peut survenir, notamment par compression du panneau acoustique 6, ainsi que par des sollicitations en traction de l'enveloppe extérieure 7.

Afin d'éviter l'aspiration de la lèvre d'entrée d'air lors du moulinet de la soufflante, parmi autres effets préjudiciables à la structure de la nacelle, selon l'invention, des moyens additionnels pour rigidifier la structure ont été mis en place de façon à s'opposer à la déviation de la lèvre d'entrée d'air 5 sous l'influence de ladite aspiration, ce qui se traduit par la fixation desdits moyens additionnels en « diagonale » par rapport aux cadres de renfort existants.

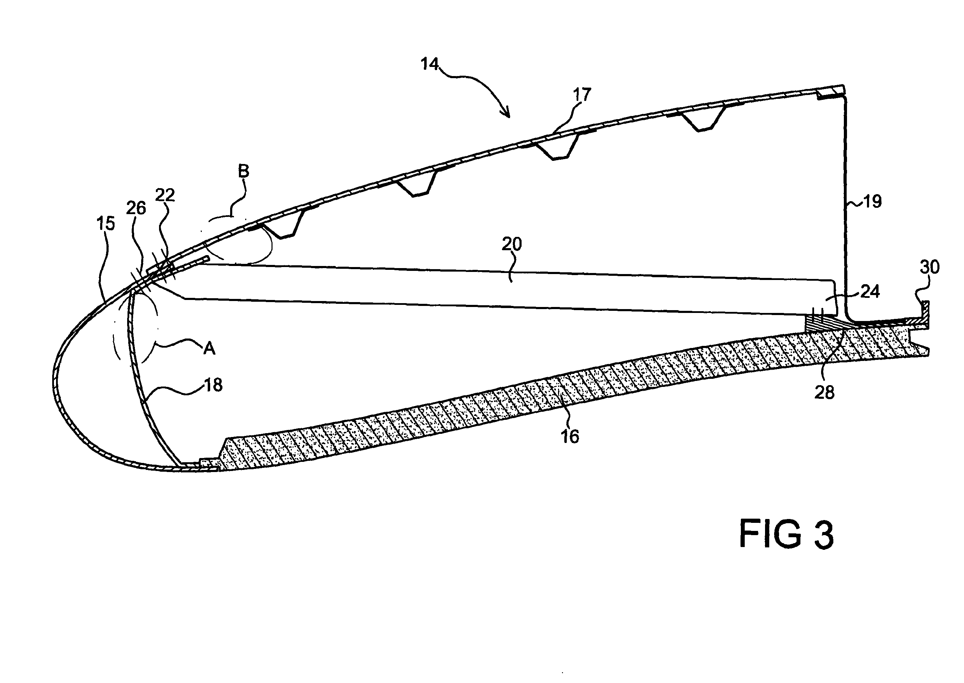

Un mode de réalisation est présenté en figure 3. On note que la structure d'entrée d'air 14 conforme à l'invention comprend une enveloppe intérieure 16, avantageusement en panneau acoustique, et une enveloppe extérieure 17. De même, une lèvre d'entrée d'air 15 forme de préférence l'extrémité de la structure 14. Dans le mode de réalisation présenté, un cadre de renfort avant 18 et un cadre de renfort arrière 19 sont présents, mais ils ne sont pas indispensables.

Les moyens additionnels pour rigidifier la structure comprennent, dans l'exemple illustré, la barre 20 ainsi que ses moyens de fixation. Ces moyens pour rigidifier pourront être une bielle de reprise d'effort, réalisée en matériau composite par exemple, et conçue pour résister aux efforts d'aspiration engendrés par la mise en moulinet du moteur. Les moyens pour rigidifier pourront consister en plusieurs bielles ou barres, il pourra s'agir également d'une enveloppe tronconique. De même, les fixations associées, par exemple des rivets, sont conçues pour résister aux contraintes de traction consécutives à l'aspiration.

La première extrémité 22 des moyens pour rigidifier 20 est fixée du côté de l'enveloppe extérieure 17 et à proximité du cadre de renfort avant 18 ; leur deuxième extrémité 24 est fixée du côté de l'enveloppe intérieure 16 et à proximité du cadre de renfort arrière 19. Ainsi, lorsque des conditions d'aspiration de la lèvre d'entrée d'air 15 sont rencontrées, les moyens additionnels pour rigidifier 20 s'opposent au mouvement de rentrée de la lèvre 15 vers l'intérieur du canal de soufflante 3 : la déviation des parties constitutives de la nacelle 2 ne se produit donc pas.

Sur cet exemple de réalisation, les extrémités 22 et 24 des moyens additionnels pour rigidifier 20 sont fixés à des endroits très proches des endroits de fixation des cadres de renfort avant 18 et arrière 19. Une certaine latitude de l'emplacement des fixations desdites extrémités est cependant acceptable.

Ainsi, dans une première variante de réalisation, l'extrémité 22 de la barre pour rigidifier 20 peut être fixée directement sur le cadre de renfort avant 18, en particulier dans la moitié supérieure des moyens de renfort, symbolisée par la zone A de la figure 3. Il est possible aussi de fixer la barre pour rigidifier 20 par les mêmes moyens de fixation 26 que ceux utilisés pour les moyens de renfort avant 18, tel qu'illustré sur la figure.

Dans une autre variante de réalisation, l'extrémité 22 de la barre 20 peut être fixée directement sur l'enveloppe extérieure 17, à proximité de l'extrémité avant de la partie annulaire formée par les deux enveloppes, c'est-à-dire en tout emplacement de la zone B.

En ce qui concerne la fixation de la deuxième extrémité autour des moyens de renfort arrière 19, des options similaires sont ouvertes, avec fixation plus en avant que le cadre 19, directement sur le cadre 19, voire par les mêmes moyens de fixation 28 tel qu'illustré sur la figure.

Il est clair qu'il est aussi envisageable de fixer l'extrémité 22 à proximité du cadre de renfort avant 18 et du côté de l'enveloppe intérieure 16, tandis que la seconde extrémité 24 est fixée du côté extérieur du cadre de renfort arrière 19. Le mouvement de rentrée de la lèvre d'entrée d'air 15 vers l'intérieur du canal de soufflante 3 sera stoppé de la même manière que dans les exemples précédents, grâce aux moyens additionnels pour rigidifier 20.

Bien que représenté, il peut être envisagé de supprimer le cadre de renfort avant 18 : dans ce cas, les moyens additionnels pour rigidifier 20 sont placés en arrière de l'extrémité arrière de la lèvre d'entrée d'air 15 (par opposition à l'extrémité avant de ladite lèvre en contact avec le fluide aérodynamique). La même alternative se présenterait avec la suppression des moyens de renfort arrière 19, et une localisation des moyens additionnels pour rigidifier autour des capots de soufflante, en avant de la zone d'accrochage du moteur 30.

A cet égard, il est possible d'utiliser les moyens présents pour la fixation du moteur, par exemple une plaque d'accrochage moteur présente sur l'enveloppe intérieure 16, et de solidariser la barre 20 directement sur une extension desdits moyens de fixation. Ceci permet de conserver le panneau acoustique 16 aussi intègre que possible.

Par ailleurs, les formes des différents éléments, des cadres de renfort par exemple, ne sont données qu'à titre indicatif : les moyens de renfort avant et arrière peuvent être tous les modes de réalisation usuels, ou ils peuvent être fabriqués en fonction de la présence de moyens supplémentaires pour rigidifier de façon à les y intégrer, par exemple par la présence d'un renfoncement pour les positionner.

## Revendications

1. Structure d'entrée d'air (14) pour un moteur d'aéronef comprenant une partie annulaire définissant un canal de soufflante (3) qui comporte une extrémité d'entrée, une enveloppe extérieure (17) et une enveloppe intérieure (16), l'enveloppe intérieure (16) présentant une zone d'accrochage (30) du moteur distante de l'extrémité d'entrée, et des moyens pour rigidifier (20) comprenant une première extrémité (24) solidarisée à l'enveloppe intérieure (16) et une deuxième extrémité (22) solidarisée à l'enveloppe extérieure (17), **caractérisée en ce que** l'une des deux extrémités (22) des moyens pour rigidifier (20) est solidarisée au niveau de l'extrémité d'entrée de la partie annulaire et l'autre extrémité (24) est solidarisée au niveau de la zone d'accrochage (30).

2. Structure selon la revendication 1 comprenant en outre des moyens de renfort avant (18) dont une première extrémité est solidarisée à l'enveloppe intérieure (16) et une deuxième extrémité est solidarisée à l'enveloppe extérieure (17), les deux extrémités étant solidarisées au niveau de l'extrémité d'entrée.

3. Structure selon la revendication 2 dans laquelle les moyens pour rigidifier (20) sont solidarisés à une extrémité (22) sur les moyens de renfort avant (18).

4. Structure selon la revendication 2 dans laquelle des moyens de fixation (26) solidarisent les moyens pour rigidifier (20) et les moyens de renfort avant (18) sur l'une des enveloppes (17).

5. Structure selon la revendication 2 dans laquelle les moyens de renfort avant (18) sont solidarisés entre l'extrémité avant et l'endroit où les moyens pour rigidifier (20) sont solidarisés au niveau de l'extrémité d'entrée.

6. Structure selon l'une des revendications 1 à 5 comprenant des moyens de renfort arrière (19) dont une première extrémité est solidarisée à l'enveloppe intérieure (16) au niveau de la zone d'accrochage (30) et une deuxième extrémité est solidarisée à l'enveloppe extérieure (17), les moyens de renfort arrière (19) définissant une quasi-normale aux enveloppes (16, 17).

7. Structure selon la revendication 6 dans laquelle les moyens pour rigidifier (20) sont solidarisés à une extrémité sur les moyens de renfort arrière (19).

8. Structure selon la revendication 6 dans laquelle des moyens de fixation (28) solidarisent les moyens pour rigidifier (20) et les moyens de renfort arrière (19) sur l'une des enveloppes (16).

9. Structure selon la revendication 8 comprenant une plaque d'accrochage moteur sur l'enveloppe intérieure (16) sur laquelle sont solidarisés les moyens pour rigidifier (20) et les moyens de renfort arrière (19).

10. Structure selon l'une des revendications 1 à 9 dans laquelle la deuxième extrémité (24) des moyens pour rigidifier (20) est solidarisée au niveau de l'extrémité d'entrée.

11. Structure selon l'une des revendications précédentes dans laquelle les moyens pour rigidifier (20) sont composés d'une bielle composite.

12. Structure selon la revendication précédente comprenant une pluralité de bielles.

13. Structure selon l'une des revendications précédentes dans laquelle les moyens pour rigidifier (20) sont solidarisés aux enveloppes (16, 17) par l'intermédiaire de rivets.

14. Structure selon l'une des revendications précédentes comprenant une lèvre d'entrée d'air (15) au niveau de l'extrémité d'entrée.

15. Structure selon l'une des revendications précédentes dans laquelle l'enveloppe intérieure (16) comprend un panneau acoustique.

## Claims

1. Air intake structure (14) for an aircraft engine, comprising:
an annular part defining a fan duct (3) that comprises an intake end,
an outer casing (17),
an inner casing (16) provided with an engine attachment area (30) remote from the intake end, and
stiffening means (20) comprising a first end (24) fixed to the inner casing (16) and a second end (22) fixed to the outer casing (17),
**characterized in that** one of the two ends (22) of the stiffening means (20) is fixed at the intake end of the annular part and the other end is fixed at the attachment area (30).

2. Structure according to claim 1 comprising also at least one forward stiffening frame (18), one end of which is fixed to the inner casing (16) and a second end is fixed to the outer casing (17), the two ends being fixed at the intake end.

3. Structure according to claim 2, in which the stiffening means (20) are fixed to an end (22) on the forward stiffening frame (18).

4. Structure according to claim 2, in which fastening elements (26) fix the stiffening means (20) and the forward stiffening frame (18) onto one of the casings (17).

5. Structure according to claim 2, in which the forward stiffening frame (18) is fixed between the forward end and the location at which the stiffening means (20) are fixed at the intake end.

6. Structure according to one of the claims 1 to 5, comprising an aft stiffening frame (19), a first end of which is fixed to the inner casing (16) at the attachment area (30) and a second end of which is fixed to the outer casing (17), the aft stiffening frame (19) defining a line approximately normal to the casings (16, 17).

7. Structure according to claim 6, in which one end of the stiffening means (20) is fixed to the aft stiffening frame (19).

8. Structure according to claim 6, in which fastening elements (28) fix the stiffening means (20) and the aft stiffening frame (19) onto one of the casings (16).

9. Structure according to claim 8, comprising an engine attachment plate on the inner casing (16) on which stiffening means (20) and the aft stiffening frame (19) are fixed.

10. Structure according to one of the claims 1 to 9, in which the second end (24) of the stiffening means (20) is fixed at the intake end.

11. Structure according to one of the preceding claims, in which the stiffening means (20) include a connecting rod made of composite material.

12. Structure according to claim 11, comprising a plurality of connecting rods.

13. Structure according to one of the preceding claims, in which the stiffening means (20) are fixed to the casings (16, 17) by rivets.

14. Structure according to one of the preceding claims, comprising an air intake lip (15) at the intake end.

15. Structure according to one of the preceding claims, in which the inner casing (16) comprises a soundproofing panel.

## Patentansprüche

1. Lufteintrittsstruktur (14) für ein Triebwerk eines Luftfahrzeugs, umfassend einen ringförmigen Abschnitt, der einen Gebläsekanal (3) festlegt, der ein Eintrittsende, eine äußere Umhüllung (17) und eine innere Umhüllung (16) umfasst, wobei die innere Umhüllung (16) eine Aufhängungszone (30) des Triebwerks aufweist, die von dem Eintrittsende entfernt ist, sowie Versteifungsmittel (20), die ein mit der inneren Umhüllung (16) einstückiges bzw. fest verbundenes erstes Ende (24) und ein mit der äußeren Umhüllung (17) einstückiges bzw. fest verbundenes zweites Ende (22) aufweisen, **dadurch gekennzeichnet, dass** eines der beiden Enden (22) der Versteifungsmittel (20) auf Höhe des Eintrittsendes des ringförmigen Abschnitts fest verbunden ist und das andere Ende (24) an der Aufhängungszone (30) fest verbunden ist.

2. Struktur nach Anspruch 1, außerdem vordere Verstärkungsmittel (18) umfassend, von denen ein erstes Ende mit der inneren Umhüllung (16) einstückig bzw. fest verbunden ist und ein zweites Ende mit der äußeren Umhüllung (17) einstückig bzw. fest verbunden ist, wobei die beiden Enden am Eintrittsende einstückig bzw. fest verbunden sind.

3. Struktur nach Anspruch 2, wobei die Versteifungsmittel (20) mit einem Ende (22) an den vorderen Verstärkungsmitteln (18) einstückig bzw. fest verbunden sind.

4. Struktur nach Anspruch 2, wobei
Befestigungsmittel (26) die Versteifungsmittel (20) und die vorderen Verstärkungsmittel (18) mit einer der Umhüllungen (17) fest verbinden.

5. Struktur nach Anspruch 2, wobei die vorderen Verstärkungsmittel (18) zwischen dem Vorderende und der Stelle, an der die Versteifungsmittel (20) am Eintrittsende fest verbunden sind, einstückig bzw. fest verbunden sind.

6. Struktur nach einem der Ansprüche 1 bis 5, hintere Verstärkungsmittel (19) umfassend, von denen ein erstes Ende mit der inneren Umhüllung (16) an der Aufhängungszone (30) einstückig bzw. fest verbunden ist und ein zweites Ende mit der äußeren Umhüllung (17) einstückig bzw. fest verbunden ist, wobei die hinteren Verstärkungsmittel (19) annähernd eine Senkrechte zu den Umhüllungen (16,17) festlegen.

7. Struktur nach Anspruch 6, wobei die Versteifungsmittel (20) an einem Ende mit den hinteren Verstärkungsmitteln (19) einstückig bzw. fest verbunden sind.

8. Struktur nach Anspruch 6, wobei Befestigungsmittel (28) die Versteifungsmittel (20) und die hinteren Verstärkungsmittel (19) mit einer der Umhüllungen (16) fest verbinden.

9. Struktur nach Anspruch 8, umfassend eine Triebwerk-Aufhängungsplatte an der inneren Umhüllung (16), mit der die Versteifungsmittel (20) und die hinteren Verstärkungsmittel (19) einstückig bzw. fest verbunden sind.

10. Struktur nach einem der Ansprüche 1 bis 9, wobei das zweite Ende (24) der Versteifungsmittel (20) am Eintrittsende fest verbunden ist.

11. Struktur nach einem der vorangehenden Ansprüche, wobei die Versteifungsmittel (20) aus einer Verbund-Kurbelstange bestehen.

12. Struktur nach dem vorangehenden Anspruch, mehrere Kurbelstangen umfassend.

13. Struktur nach einem der vorangehenden Ansprüche, wobei die Versteifungsmittel (20) mit den Umhüllungen (16,17) mittels Nieten fest verbunden sind.

14. Struktur nach einem der vorangehenden Ansprüche, umfassend eine Lufteintrittslippe (15) am Eintrittsende.

15. Struktur nach einem der vorangehenden Ansprüche, wobei die innere Umhüllung (16) eine Akustikplatte bzw. Schallschluckplatte umfasst.
